# EUROPEAN PATENT SPECIFICATION

(11) **EP 4 194 237 B1**
(45) Date of publication and mention of the grant of the patent: **08.04.2026**
(21) Application number: 21214134.5
(22) Date of filing: 13.12.2021
(51) Int. Cl.: B60J 3/04, B32B 17/10, G02F 1/163, B62D 25/06, G02F 1/153

(54) **TRANSPARENT ROOF ASSEMBLY COMPRISING A SEGMENTED OPTICALLY SWITCHABLE PANEL**
TRANSPARENTE DACHANORDNUNG MIT EINER SEGMENTIERTEN OPTISCH SCHALTBAREN PLATTE
ENSEMBLE TOIT TRANSPARENT COMPRENANT UN PANNEAU OPTIQUEMENT COMMUTABLE SEGMENTÉ

(43) Date of publication of application: 14.06.2023
(73) Proprietor: Inalfa Roof Systems Group B.V., 5807 GW Oostrum (NL)
(72) Inventor: VAN DOLEWEERD, Theodorus, 6024 AK Budel-Dorplein (NL)
(74) Representative: De Vries & Metman

(56) References cited:
- EP-B1- 4 341 088
- WO-A1-2020/156773
- US-A1- 2012 320 621
- US-A1- 2016 154 290

## Description

The invention relates to a transparent roof assembly for a vehicle roof and in particular to such a transparent roof assembly comprising a segmented optically switchable panel.

An open-roof assembly is well-known. The open-roof assembly is configured to be mounted in a vehicle roof and comprises at least one moveably arranged closure member. The closure member is configured and arranged to cover an opening in the vehicle roof or at least partly uncover the opening in the vehicle roof. Usually, but not necessarily, the closure member is a transparent panel and comprises glass or a suitable plastics. The closure member may be configured to tilt or to slide.

Further, it is known to provide a fixed, usually transparent panel in the vehicle roof of a passenger compartment to enable a sky view through the roof of the vehicle, for example, for any occupants in the passenger compartment.

In either of the above-mentioned vehicle roofs, a transparent panel may be optically switchable. An optically switchable panel, as used herein, is a panel of which an optical property may be changed by an occupant. In particular, the optical property of the optically switchable panel may be changed by application of an electric field. Different kinds of such an optically switchable panel are known. For example, an electrochromic panel is known. Further, a number of kinds of such a panel that apply a liquid crystal layer are known. Some examples of the latter kind comprise a PDLC (polymer dispersed liquid crystal) layer, a SPD (suspended particle device) layer or a GHLC (guest host liquid crystal) layer.

The optically switchable panel may comprise two electrode layers between which an optically switchable material is provided. A suitable electric voltage may be applied on these electrodes to thereby provide an electric field between the electrodes. The electric field induces the change of the optical property of the optically switchable material.

E.g. WO 2020/156773 A1 discloses a laminated pane with electrically controllable optical properties, and laminated pane assembly.

Depending on the kind of switchable material applied, the electric voltage may be preferred to be an alternating (AC) voltage or a DC voltage. Further, a preferred voltage level may be dependent on the kind of switchable material and other properties. Usually, however, the voltage level is relatively high, i.e. higher than a battery voltage of a vehicle. So, the voltage level may need to be transformed to a higher voltage and/or may be transformed from a DC voltage to an AC voltage.

For a segmented optically switchable panel, which comprises multiple segments that may be optically switched independently from each other, a relatively large number of individual connections between a driver circuitry and the optically switchable panel are needed, for which no cost-effective connectors meeting automotive regulations are readily available.

EP 4 341 088 forms prior art according to Art. 54(3) EPC and relates to a glazing unit with electrically controllable optical properties, comprising a plurality of independent switching regions. The glazing unit comprises a composite pane with an electrically controllable functional element and a control unit which is suitable for controlling the optical properties of the functional element. The functional element has an active layer with electrically controllable optical properties between a first flat electrode and a second flat electrode. The first flat electrode is divided into at least two separate electrode segments by at least one insulating line, and an electric voltage can be applied between each electrode segment of the first flat electrode and the second flat electrode independently of one another in order to control the optical properties of the active layer section located therebetween.

In a first aspect, a transparent roof assembly for a vehicle roof according to claim 1 is provided. The transparent roof assembly comprises a segmented optically switchable panel, a drive voltage circuitry and a switching circuitry. The segmented optically switchable panel comprises at least two independently switchable segments, each segment comprising a first optical state and a second optical state different from the first optical state. The drive voltage circuitry comprises a voltage circuit input terminal for receiving an input voltage and a voltage circuit output terminal for supplying a drive voltage for switching between the first optical state and the second optical state. The switching circuitry comprises a switching circuit input terminal, a command input terminal for receiving a command signal representing a user command indicating a desired optical state of each of the switchable segments and at least two switching circuit output terminals for selectively operating the switchable segments corresponding to the command signal. The segmented optically switchable panel comprises a transparent area and an opaque area, wherein the switching circuitry is arranged on the opaque area of the segmented optically switchable panel.

In order to operate the optically switchable panel, the needed drive voltage, either AC or DC, is generated in the drive voltage circuitry, providing the drive voltage at its voltage circuit output terminal. For individually switching a number of segments of the segmented optically switchable panel, a switching circuitry is provided, which comprises a number of switching circuitry output terminals adapted to individually switch a corresponding number of segments of the segmented optically switchable panel. Preferably, the number of switching circuit output terminals corresponds to or exceeds the number of segments such that each segment is individually switchable.

It is noted that the use of the terms input terminal and output terminal is not to be construed as limiting, but merely as a term for distinguishing between a terminal at a first circuit side and a terminal at a second circuit side, respectively. In other words, the use of the terms input terminal and output terminal do not encompass or suggest a positive or a negative terminal, or the like.

To provide a suitable connection between the switching circuitry and the segments of the segmented optically switchable panel, the switching circuitry is arranged on the transparent panel which enables to provide a standard three or four pin connection to the vehicle for receiving a supply voltage. The supply voltage may be a vehicle battery voltage, if the drive voltage circuitry is also arranged on the transparent panel, or the supply voltage may be the drive voltage generated by the drive voltage circuitry, if the drive voltage circuitry is not arranged on the transparent panel. For such a standard three or four pin connection, suitable standard connectors meeting automotive requirements and regulations are readily available.

In an embodiment of the transparent roof assembly, the switching circuitry is arranged in a layer of a polymer material in a liquid-tight manner. Commonly, a layer of polymer material like a polyurethane layer is arranged near a peripheral edge of the transparent panel, to which layer of polymer material may commonly be referred as an encapsulation layer. Arranging the switching circuitry in such polymer layer provides a simple and cost-effective protection against liquid and moisture.

In a particular embodiment of such a transparent roof assembly, the switching circuitry is arranged in a housing and the housing is arranged in the polymer material. Using such a housing may be designed and configured to enable access to the switching circuitry, e.g. in case of malfunctioning, or the like.

The segmented optically switchable panel comprises a printed circuit element, the printed circuit element being configured to couple a switchable segment to a respective switching circuit output terminal of the switching circuitry. For example, a flexible printed circuit may be arranged along a peripheral edge of the optically switchable panel, wherein respective conductive tracks on the flexible printed circuit are connected to respective segments of the optically switchable panel. The switching circuit output terminals of the switching circuitry may then be connected to the respective conductive tracks of the flexible printed circuit, thereby being connected to the respective segments.

In a particular embodiment of the transparent roof assembly, the switching circuitry is arranged on the printed circuit element. In a more particular embodiment of the transparent roof assembly, the switching circuitry is embedded in an integrated circuit element and the integrated circuit element being arranged on the printed circuit element. Such an integrated circuit element is commonly referred to as a chip. For example, in the above described exemplary embodiment employing a flexible printed circuit, an integrated circuit element like an ASIC may be arranged on the flexible printed circuit. Similarly, in another particular embodiment of the transparent roof, the drive voltage circuitry may be arranged on the printed circuit element.

In an embodiment of the transparent roof assembly, the segmented optically switchable panel comprises a switchable material layer arranged between a first electrode layer and a second electrode layer, wherein the first electrode layer is connected to the voltage circuit output terminal and wherein the second electrode layer is segmented in electrode segments, at least two electrode segments being connected to at least two respective switching circuit output terminals. In this embodiment, the drive voltage circuitry is connected between the vehicle battery and the optically switchable panel, while the switching circuitry is connected between a common and the optically switchable panel. Hence, the switching circuitry does not switch the connection between drive voltage circuitry and the optically switchable panel.

In an embodiment of the transparent roof assembly, a voltage is supplied to the segmented optically switchable panel through a wiring, the wiring comprising a liquid-tight connector. A connector may be used to connect the segmented optically switchable panel to the vehicle battery. Such connector may be arranged between the and the vehicle battery or between the drive voltage circuitry and the segmented optically switchable panel. The connector is liquid-tight to meet safety requirements and regulations, for example.

In a particular embodiment of the transparent roof assembly, the transparent roof assembly comprises a first functional element and a second functional element. The first functional element comprises the optically switchable panel. The transparent roof assembly further comprises a control unit configured to control operation of the second functional element. The drive voltage circuitry is arranged in the control unit. For example, the second functional element may comprise a motor-driven moveable closure member or may comprise sensor circuitry configured to detect a property in a vehicle occupants compartment or to detect a property outside the vehicle. In another example, the second functional element may comprise entertainment equipment for entertaining an occupant of the vehicle, wherein the second functional element may comprise a display, for example. The control unit for such a second functional element requires and receives a supply voltage from the vehicle battery and it may be cost-effective to integrate the drive voltage circuitry with such a control unit.

In an embodiment of the transparent roof assembly, the transparent roof assembly comprises a frame, a first transparent panel and a second transparent panel. The first transparent panel comprises a segmented optically switchable panel and the second transparent panel comprises an optically switchable panel. The drive voltage circuitry is arranged on the frame and the switching circuitry is arranged on the opaque area of the first transparent panel. In a particular embodiment thereof, the second transparent panel comprises a segmented optically switchable panel and a further switching circuitry is arranged on the opaque area of the second transparent panel. If two transparent and optically switchable panels are provided in the transparent roof assembly, it may be cost-effective to arrange the drive voltage circuitry on the frame such that a single drive voltage circuitry may supply the drive voltage to both optically switchable panels. If one or both optically switchable panels are segmented, the switching circuitry may be preferred to be arranged on the transparent panels to enable the use of standard and readily available connectors.

In an aspect, a vehicle comprising an embodiment of the above-described vehicle roof assembly is provided.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description with reference to the appended schematical drawings, in which:
- Fig. 1A: shows a perspective view of a vehicle roof with an open roof assembly;
- Fig. 1B: shows an exploded view of the open roof assembly of Fig. 1A;
- Fig. 2A: illustrates a circuit diagram of a first embodiment of circuitry for use with a transparent roof assembly;
- Fig. 2B: illustrates a circuit diagram of a second embodiment of circuitry for use with a transparent roof assembly;
- Fig. 3A: is a cross-sectional view of a first embodiment of a transparent roof assembly;
- Fig. 3B: shows a partial top view of the first embodiment of Fig. 3B;
- Fig. 4A: shows a cross-sectional view of a second embodiment of a transparent roof assembly;
- Fig. 4B: shows a cross-sectional view of a third embodiment of a transparent roof assembly;
- Fig. 5: shows a cross-sectional view of a fourth embodiment of a transparent roof assembly; and
- Fig. 6: shows a perspective view of a fifth embodiment of a transparent roof assembly.

The present invention will now be described with reference to the accompanying drawings, wherein the same reference numerals have been used to identify the same or similar elements throughout the several views.

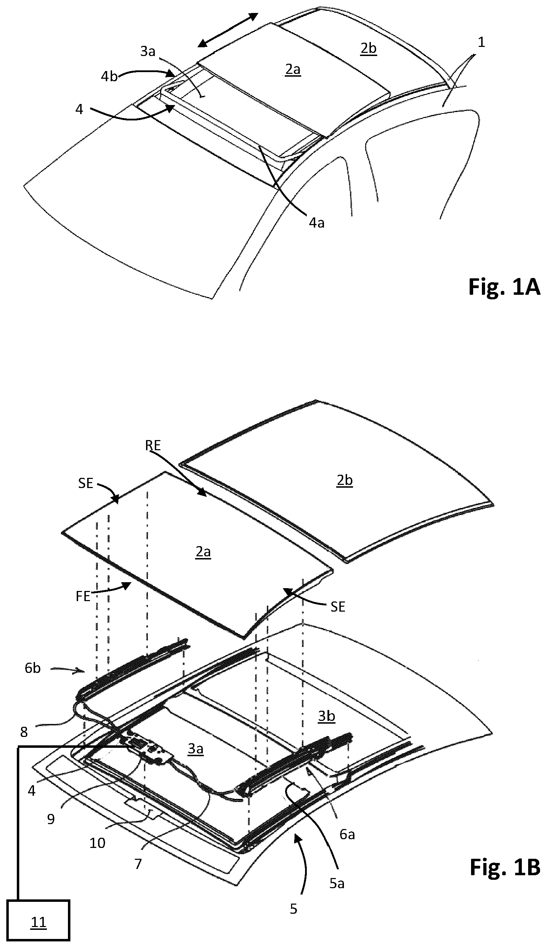

Fig. 1A illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly. An edge 5a of the frame 5 defines the first roof opening 3a.

The second roof opening 3b is arranged under the fixed panel 2b such that light may enter a vehicle interior passenger compartment through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the moveable panel 2a is in the open position. In its raised position, the wind deflector 4 reduces inconvenient noise due to air flow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and a electric motor 9.

The drive cables 7, 8 couple the electric motor 9 to the mechanisms of the respective guide assemblies 6a, 6b such that upon operating the electric motor 9, the mechanisms start to move. In particular, a core of the drive cable 7, 8 is moved by the electric motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention. Moreover, in a particular embodiment, an electric motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the electric motor 9 is mounted near or below the front end FE of the moveable panel 2a at a recess 10. In another embodiment, the electric motor 9 may be positioned at any other suitable position or location. For example, the electric motor 9 may be arranged near or below the rear end RE of the moveable panel 2a or below the fixed panel 2b.

A control module 11 is schematically illustrated and is operatively coupled to the electric motor 9. The control module 11 may be any kind of processing module, either a software controlled processing module or a dedicated processing module, like an ASIC, which are both well known to those skilled in the art. The control module 11 may be a stand-alone control module or it may be operatively connected to another control module, like a multipurpose, generic vehicle control module. In yet another embodiment, the control module 11 may be embedded in or be part of such a generic vehicle control module. Essentially, the control module 11 may be embodied by any control module suitable for, capable of and configured for performing operation of the electric motor 9 and thus the moveable roof assembly.

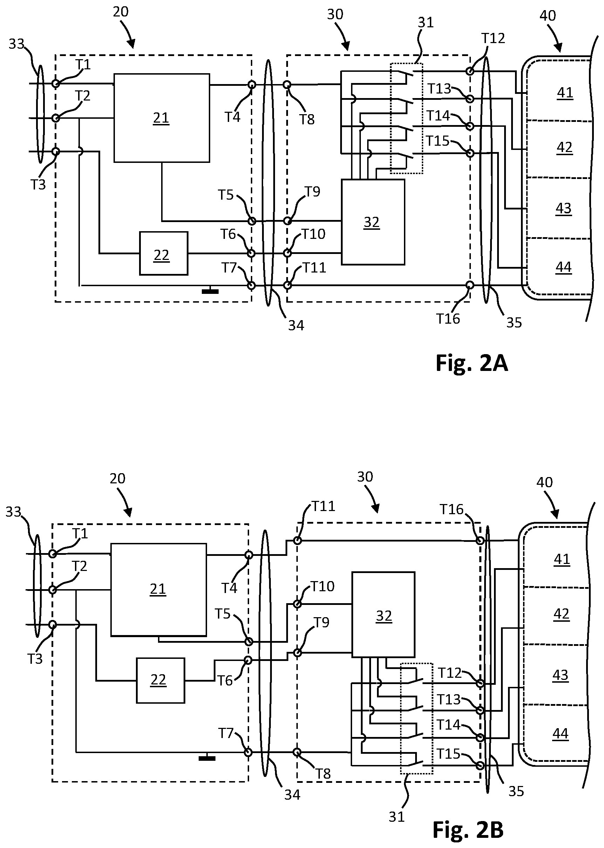

Either or both of the moveable panel 2a and the fixed panel 2b may be an optically switchable transparent panel. Figs. 2A and 2B illustrate respective embodiments of a driver circuitry for driving and operating an optically switchable layer present in such an optically switchable transparent panel, as well known in the art. Such known layers include a PDLC, SPD, GHLC and electrochromic layers and other layers having optically switchable properties. An optically switchable material is operated by applying an electric field by application of a drive voltage between at least two electrode layers, between which the optically switchable material is arranged. As such optically switchable layers are well known in the art, a more detailed description thereof is omitted herein.

Referring to Fig. 2A, in a first embodiment of the above-mentioned driver circuitry, a drive voltage circuit 20 and a switching circuitry 30 are connected in series with a segmented optically switchable panel 40. The segmented optically switchable panel 40 comprises four segments that are individually switchable: a first segment 41, a second segment 42, a third segment 43 and a fourth segment 44.

The drive voltage circuitry 20 comprise three voltage circuit input terminals T1 - T3. A first voltage circuit input terminal T1 is configured to receive a vehicle battery voltage, which commonly is about 12 - 14 VDC. A second voltage circuit input terminal T2 is configured to be connected to a common of the vehicle. A third voltage circuit input terminal T3 is configured to receive a command signal. The third voltage circuit input terminal T3 is therefore optional, since the drive voltage circuitry 20 does not need the command signal to properly operate. Further, a fourth voltage circuit input terminal may optionally be provided such to provide a separate common for the command signal, if so desired.

The drive voltage circuitry 20 comprises a transforming circuitry 21, which receives the battery voltage from the first voltage circuit input terminal T1 and transforms it into the needed drive voltage. The drive voltage may be an AC voltage or a DC voltage and may have a low or a high voltage level, e.g. a voltage level between 20 and 100 V, usually between 30 and 60 V. The drive voltage is supplied to a first voltage circuit output terminal T4.

The transforming circuitry 21 further supplies a same or other voltage to a second voltage circuit output terminal T5. This same or other voltage is configured to provide a suitable supply voltage for the switching circuitry 30, as is elucidated hereinbelow in more detail. This supply voltage may not be generated in the drive voltage circuitry 20, but may as well be generated in the switching circuitry 30 instead. However, depending on the embodiment, the switching circuitry may be desired to be as lean as possible, in which case it may be desired to generate the needed supply voltage in the drive voltage circuitry such that a number of electronic components in the switching circuitry 30 may be kept low.

The drive voltage circuitry 20 comprises, in the illustrated embodiment, an optional galvanic isolation circuit 22 to provide for a galvanic isolation between the third voltage circuit input terminal T3 and the switching circuitry 30. The galvanic isolation circuitry 22 may be provided in the switching circuitry 30 instead, but, as above mentioned, it may be preferred to keep a number of components in the switching circuitry 30 as low as possible. The command signal is received by the galvanic isolation circuit 22 and a similar command signal is supplied to a third voltage circuit output terminal T6.

The second voltage circuit input terminal T2 is connected to a fourth voltage circuit output terminal T7, thus providing a direct connection to the common of the vehicle.

The switching circuit 30 comprises four input terminals: a first switching circuit input terminal T8 connected to the first voltage circuit output terminal T4, thus receiving the drive voltage; a second switching circuit input terminal T9 connected to the second voltage circuit output terminal T5, thus receiving the supply voltage; a third switching circuit input terminal T10 connected to the third voltage circuit output terminal T6, thus receiving the command signal; and a fourth switching circuit input terminal T11 connected to the third voltage circuit output terminal T7, thus connecting to the common.

The switching circuitry 30 further comprises a microcontroller 32 and a number of switching components 31, each switching component being operatively coupled to the microcontroller 32. The microcontroller 32 receives the supply voltage to operate and receives the command signal. Based on the command signal, the microcontroller 32 operates each of the switching components 31 to individually switch one or more segments 41 - 44 between a first optical state and a second optical state. For example, in the first optical state, the segments may appear optically transparent, while in the second optical state, the segment may appear hazy, darkened or even opaque.

Each of the four switching components 31 is connected to a respective one of four switching circuit output terminal T12 - 15, which are each connected to a respective one of the four segments 41 - 44. The four segments 41 - 44 are part of a first electrode layer of the optically switchable panel 40. A fifth switching circuit output terminal T16 provides a connection to common. The fifth switching circuit output terminal T16 is connected to a second electrode layer of the optically switchable panel 40, wherein the second electrode layer is arranged opposite to the first electrode layer and wherein an optically switchable material layer is arranged between the first and the second electrode layers.

As apparent to those skilled in the art, in normal operation, the drive voltage is generated in the drive voltage circuitry 20 and is supplied to a first switch terminal of each of the switching components 31. The command signal is provided to the microcontroller 32, which operates each of the switching components 31 such that a selected number of switching components 31 connects its second switch terminal to the first switch terminal and thus supplies the drive voltage to selected ones of the segments 41 - 44 corresponding to the command signal.

At an input side of the drive voltage circuitry 20, three input terminals are present and thus a three-pin connector may be used to provide a connection between the vehicle battery and the drive voltage circuitry 20. This number is not dependent on the number of segments 41 - 44. At an input side of the switching circuitry 30, four input terminals are present and thus a four-pin connector may be used to provide a connection between the drive voltage circuitry 20 and the switching circuitry 30. This number is not dependent on the number of segments 41 - 44. At the output side of the switching circuitry 30, five output terminals are present and enable a connection to four individual segments 41 - 44. In case more segments are used, more output terminals are needed and correspondingly a segment connector 35 or connecting wiring needs to be adapted to such a number of segments. In order to be able to use commonly available connectors, a connection to the segmented optically switchable panel 40 is preferably made by a switching circuitry connector 34 or a voltage circuitry connector 33, each having a standard, predetermined number of connections.

Fig. 2B illustrates a second embodiment of the driver circuitry. Fig. 2B is similar to the first embodiment, except that the switching circuitry 30 is configured to switch a connection between the segments 41 - 44 and the common instead of being configured to switch a connection between the segments 41 - 44 and the drive voltage. The connections between the input and output terminals have been adapted accordingly. The operation of the second embodiment is similar to the operation of the first embodiment as apparent to those skilled in the art. Further detailed description of the connections and the operation is therefore omitted herein.

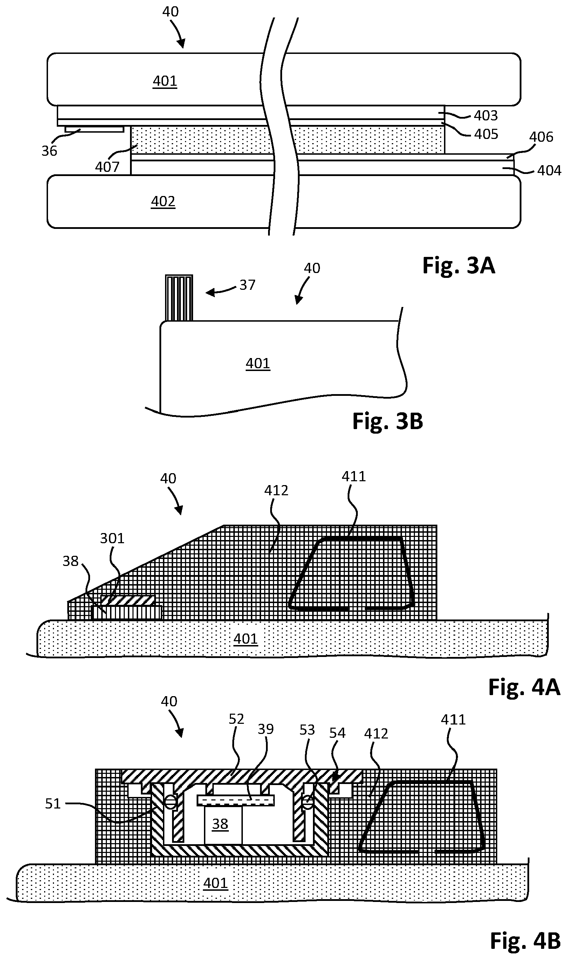

Fig. 3A shows an optically switchable panel 40. The optically switchable panel 40 comprises a first rigid transparent pane 401 and a second rigid transparent pane 402. Both rigid panes 401, 402 may be made of glass or a suitable plastics, as known in the art. Between the rigid panes 401, 402 is arranged a stack of layers that provide for the optical switchability. The stack comprises a first support layer 403 and a second support layer 404, having a first electrode layer 405 and a second electrode layer 406, respectively, arranged thereon. Between the first and second electrode layers 405, 406, a layer of optically switchable material 407, for example comprising a liquid crystal composition. The configuration of the stack is well known in the art and is therefore not further elucidated herein.

A strip element 36 comprising a number of electrically conductive tracks, for example a flexible printed circuit, is provided on the first electrode layer 405. In the illustrated embodiment, the first electrode layer 405 is segmented into a number of separate electrode segments such to provide optically switchable segments. Each of the electrode segments is electrically coupled to one of the conductive tracks. The second electrode layer 406 may be a single electrode segment that is electrically connected at one location, e.g. at a corner of the optically switchable panel 40. In another embodiment, the second electrode layer 406 may be segmented as well, in which case a similar strip element with conductive tracks may be arranged on and in electrical contact with the second electrode layer 406.

Fig. 3B shows an edge corner of the optically switchable panel 40, wherein a strip connector 37 extends beyond an edge of the rigid pane 401. The strip connector 37 may be an end part of the strip element 36 or may be a separate element, depending on the configuration. For example, in an embodiment, the switching circuitry 30 and the segments 41 - 44 may be connected to each other through the strip connector 37 through the segment connector 35 (see also Figs. 2A - 2B), in which case it may be cost-effective that the strip connector 37 is an end part of the strip element 36. In another exemplary embodiment, the strip connector 37 may be connected to an integrated circuit (not shown in Fig. 3B) that is arranged between the first and second rigid panes 401, 402 and which integrated circuit comprises the switching circuitry 30 such that the strip connector 37 is configured to connect the drive voltage circuitry 20 and the switching circuitry 30 through the switching circuitry connector 34.

Fig. 4A shows the first rigid pane 401 of the optically switchable panel 40 having arranged thereon a strengthening structure 411 arranged in a polymer layer 412. Such a layer of polymer material is well known in the art and may comprise polyurethane, for example. A flat element 38 comprising electrically conductive tracks is arranged in the polymer layer 412 as well. On the flat element 38, e.g. a flexible printed circuit element, an integrated circuit element 301 is provided. The integrated circuit element 301 may comprise the switching circuitry 30 or the drive voltage circuitry 20 or both. The flat element 38 may be connected to the strip element 36 (Fig. 3A), for example, through a connector or may be an extended part of the strip element 36 that is bent around an edge of the first rigid pane 401.

Fig. 4B shows the first rigid pane 401 of the optically switchable panel 40 having arranged thereon a strengthening structure 411 arranged in a polymer layer 412, similar to the embodiment of Fig. 4A. Further, the flat element 38 comprising electrically conductive tracks is arranged in the polymer layer 412 as well and, in this embodiment of Fig. 4B, extends into a housing. The housing comprises a base part 51 and a lid part 52. The base part 51 is fixed in the polymer layer 412. The lid part 52 may be removably or fixedly arranged. A sealing element 53 provides for a liquid-tight connection between the base part 51 and the lid part 52. Lid protrusions 54 may be provided to securely connect the lid part 52 to the base part 51, e.g. using a clip retention or a screw-thread to screw the lid part 52 on the base part 51.

In the housing, the flat element 38 may be connected to a printed circuit board 39 on which the drive voltage circuitry 20 or the switching circuitry 30 or both are provided.

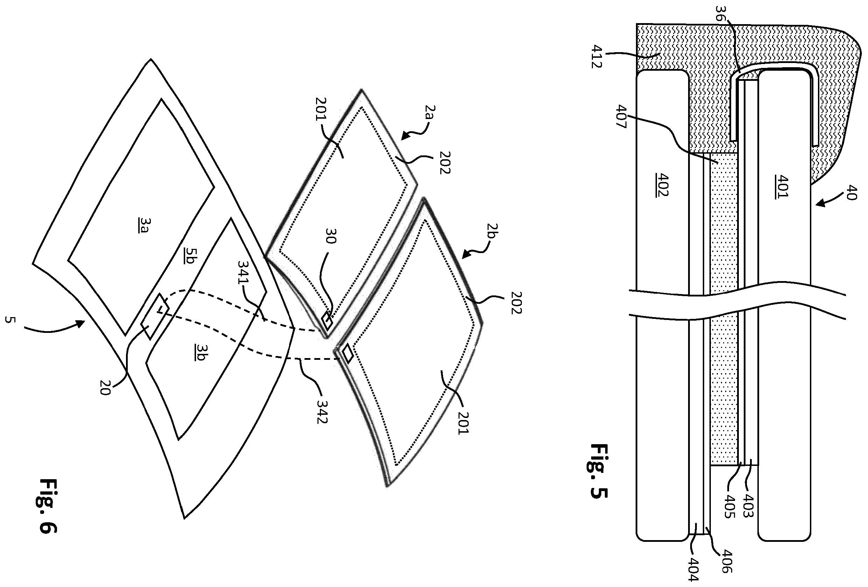

Fig. 5 illustrates another embodiment of an optically switchable panel 40, wherein the strip element 36 with electrically conductive tracks is arranged along and bent around the edge of the first rigid pane 401. The edge of the optically switchable panel 40, including the strip element 36, is provided with the polymer layer 412 to protect all elements of the stack and the strip element 36 against liquid and moisture.

Fig. 6 illustrates an embodiment of a transparent roof assembly comprising a first transparent panel 2a and a second transparent panel 2b arranged over a first roof opening 3a and a second roof opening 3b, respectively. As described in relation to Fig. 1A, the first transparent roof panel 2a may be moveably arranged. For example, the first transparent roof panel 2a may be tiltable and/or slidable. The first roof opening 3a and the second roof opening 3b are provided in the frame 5, which frame 5 further supports the first and second transparent roof panels 2a, 2b.

The first transparent panel 2a may comprise a segmented optically switchable panel. The second transparent panel 2b may comprise an optically switchable panel, that may or may not be segmented. Both panels 2a, 2b need a drive voltage for operating the optically switchable material layer. Therefore, e.g. for cost-effectiveness, a single drive voltage circuitry 20 is provided on the frame 5. In particular, in this embodiment, the drive voltage circuitry 20 is arranged on a middle beam 5b that is arranged below a boundary between the first transparent panel 2a and the second transparent panel 2b, when the transparent panels 2a, 2b are in a closed position, i.e. covering the roof openings 3a, 3b, respectively.

The drive voltage is supplied to each transparent panel 2a, 2b through a suitable wiring 341, 342, respectively. At least on the first transparent panel 2a, switching circuitry 30 is provided to control the individual segments. Optionally, similar switching circuitry may be provided on the second transparent panel 2b.

The transparent panels 2a, 2b each comprise a transparent area 201 and a peripheral opaque area 202. The opaque area 202 may be made opaque by application of a polymer layer, for example. The switching circuitry 30 is removed from plain sight by arranging the switching circuitry 30 in the opaque area 202.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described it is apparent that the same may be varied in many ways. Such variations are not to be regarded as a departure from the scope of the invention, and all such modifications as would be apparent to one skilled in the art are intended to be included within the scope of the following claims.

## Claims

1. A transparent roof assembly for a vehicle roof (1), the transparent roof assembly comprising a segmented optically switchable panel (40), a drive voltage circuitry (20) and a switching circuitry (30),
the segmented optically switchable panel (40) comprising at least two independently switchable segments (41-44), each segment (41-44) comprising a first optical state and a second optical state different from the first optical state,
the drive voltage circuitry (20) comprising a voltage circuit input terminal (T1) for receiving an input voltage and a voltage circuit output terminal (T4) for supplying a drive voltage for switching between the first optical state and the second optical state,
the switching circuitry (30) comprising a switching circuit input terminal (T8), a command input terminal (T10) for receiving a command signal representing a user command indicating a desired optical state of each of the switchable segments and at least two switching circuit output terminals (T12-T15) for selectively operating the switchable segments (41-44) corresponding to the command signal,
wherein the segmented optically switchable panel (40) comprises a transparent area (201) and an opaque area (202), and
wherein the switching circuitry (30) is arranged on the opaque area (202) of the segmented optically switchable panel (40), **characterized in that** the segmented optically switchable panel (40) comprises a printed circuit element (38), the printed circuit element being configured to couple a switchable segment to a respective switching circuit output terminal of the switching circuitry.

2. The transparent roof assembly according to claim 1, wherein the switching circuitry (30) is arranged in a layer (412) of a polymer material in a liquid-tight manner.

3. The transparent roof assembly according to claim 2, wherein the switching circuitry (30) is arranged in a housing, the housing being arranged in the polymer material (412).

4. The transparent roof assembly according to claim 1, wherein the switching circuitry (30) is arranged on the printed circuit element (38).

5. The transparent roof assembly according to claim 4, wherein the switching circuitry (30) is embedded in an integrated circuit element (301), the integrated circuit element (301) being arranged on the printed circuit element (38).

6. The transparent roof assembly according to claim 4, wherein the drive voltage circuitry (20) is arranged on the printed circuit element (38).

7. The transparent roof assembly according to claim 1, wherein the segmented optically switchable panel (40) comprises a switchable material layer (407) arranged between a first electrode layer (405) and a second electrode layer (406), wherein the first electrode layer (405) is connected to the voltage circuit output terminal (T4) and wherein the second electrode layer (406) is segmented in electrode segments, at least two electrode segments being connected to at least two respective switching circuit output terminals (T12-15).

8. The transparent roof assembly according to claim 1, wherein a voltage is supplied to the segmented optically switchable panel (40) through a wiring (341,342), the wiring comprising a liquid-tight connector.

9. The transparent roof assembly according to claim 8, the transparent roof assembly comprising a first functional element and a second functional element, the first functional element comprising the optically switchable panel (40), and the transparent roof assembly further comprising a control unit configured to control operation of the second functional element,
wherein the drive voltage circuitry is arranged in the control unit.

10. The transparent roof assembly according to claim 1, wherein the transparent roof assembly comprises a frame (5), a first transparent panel (2a) and a second transparent panel (2b), the first transparent panel (2a) comprising a segmented optically switchable panel (40) and the second transparent panel (2b) comprising an optically switchable panel,
wherein the drive voltage circuitry (20) is arranged on the frame (5), and
wherein the switching circuitry (30) is arranged on the opaque area (202) of the first transparent panel (2a).

11. The transparent roof assembly according to claim 10, wherein the second transparent panel (2b) comprises a segmented optically switchable panel (40) and wherein a further switching circuitry is arranged on the opaque area of the second transparent panel.

12. A vehicle comprising the vehicle roof assembly according to claim 1.

## Patentansprüche

1. Transparente Dachbaugruppe für ein Fahrzeugdach (1), wobei die transparente Dachbaugruppe eine segmentierte, optisch schaltbare Platte (40), eine Ansteuerspannungsschaltung (20) und eine Schaltschaltung (30) aufweist,
wobei die segmentierte, optisch schaltbare Platte (40) mindestens zwei unabhängig schaltbare Segmente (41-44) aufweist, wobei jedes Segment (41-44) einen ersten optischen Zustand und einen zweiten optischen Zustand aufweist, der sich vom ersten optischen Zustand unterscheidet,
wobei die Ansteuerspannungsschaltung (20) einen Spannungsschaltungseingangsanschluss (T1) zum Empfangen einer Eingangsspannung und einen Spannungsschaltungsausgangsanschluss (T4) zum Liefern einer Ansteuerspannung zum Umschalten zwischen dem ersten optischen Zustand und dem zweiten optischen Zustand aufweist,
wobei die Schaltschaltung (30) aufweist einen Schaltschaltungseingangsanschluss (T8), einen Befehlseingangsanschluss (T10) zum Empfangen eines Befehlssignals, das einen Benutzerbefehl darstellt, der einen gewünschten optischen Zustand von jedem der schaltbaren Segmente angibt, und mindestens zwei Schaltschaltungsausgangsanschlüsse(T12-T15) zum selektiven Betreiben der schaltbaren Segmente (41-44) gemäß dem Befehlssignal,
wobei die segmentierte, optisch schaltbare Platte (40) einen transparenten Bereich (201) und einen undurchsichtigen Bereich (202) aufweist, und
wobei die Schaltschaltung (30) an dem undurchsichtigen Bereich (202) der segmentierten, optisch schaltbaren Platte (40) angeordnet ist, **dadurch gekennzeichnet, dass** die segmentierte, optisch schaltbare Platte (40) ein gedrucktes Schaltungselement (38) aufweist, wobei das gedruckte Schaltungselement so konfiguriert ist, dass es ein schaltbares Segment mit einem jeweiligen Schaltschaltungsausgangsanschluss der Schaltschaltung verbindet.

2. Transparente Dachbaugruppe gemäß Anspruch 1, wobei die Schaltschaltung (30) in einer Schicht (412) aus einem Polymermaterial flüssigkeitsdicht angeordnet ist.

3. Transparente Dachbaugruppe gemäß Anspruch 2, wobei die Schaltschaltung (30) in einem Gehäuse angeordnet ist, wobei das Gehäuse in dem Polymermaterial (412) angeordnet ist.

4. Transparente Dachbaugruppe gemäß Anspruch 1, wobei die Schaltschaltung (30) an dem gedruckten Schaltungselement (38) angeordnet ist.

5. Transparente Dachbaugruppe gemäß Anspruch 4, wobei die Schaltschaltung (30) in einem integrierten Schaltungselement (301) eingebettet ist, wobei das integrierte Schaltungselement (301) an dem gedruckten Schaltungselement (38) angeordnet ist.

6. Transparente Dachbaugruppe gemäß Anspruch 4, wobei die Ansteuerspannungsschaltung (20) an dem gedruckten Schaltungselement (38) angeordnet ist.

7. Transparente Dachbaugruppe gemäß Anspruch 1, wobei die segmentierte, optisch schaltbare Platte (40) eine schaltbare Materialschicht (407) aufweist, die zwischen einer ersten Elektrodenschicht (405) und einer zweiten Elektrodenschicht (406) angeordnet ist, wobei die erste Elektrodenschicht (405) mit dem Spannungsschaltungsausgangsanschluss (T4) verbunden ist und wobei die zweite Elektrodenschicht (406) in Elektrodensegmente segmentiert ist, wobei mindestens zwei Elektrodensegmente mit mindestens zwei jeweiligen Schaltschaltungsausgangsanschlüssen (T12-15) verbunden sind.

8. Transparente Dachbaugruppe gemäß Anspruch 1, wobei eine Spannung über eine Verdrahtung (341, 342) an die segmentierte, optisch schaltbare Platte (40) geliefert wird, wobei die Verdrahtung einen flüssigkeitsdichten Verbinder aufweist.

9. Transparente Dachbaugruppe gemäß Anspruch 8, wobei die transparente Dachbaugruppe ein erstes Funktionselement und ein zweites Funktionselement aufweist, wobei das erste Funktionselement die optisch schaltbare Platte (40) aufweist, und wobei die transparente Dachbaugruppe ferner eine Steuereinheit aufweist, die so konfiguriert ist, dass sie den Betrieb des zweiten Funktionselements steuert,
wobei die Ansteuerspannungsschaltung in der Steuereinheit angeordnet ist.

10. Transparente Dachbaugruppe gemäß Anspruch 1, wobei die transparente Dachbaugruppe einen Rahmen (5), eine erste transparente Platte (2a) und eine zweite transparente Platte (2b) aufweist, wobei die erste transparente Platte (2a) eine segmentierte,
optisch schaltbare Platte (40) aufweist und wobei die zweite transparente Platte (2b) eine optisch schaltbare Platte aufweist,
wobei die Ansteuerspannungsschaltung (20) an dem Rahmen (5) angeordnet ist und
wobei die Schaltschaltung (30) an dem undurchsichtigen Bereich (202) der ersten transparenten Platte (2a) angeordnet ist.

11. Transparente Dachbaugruppe gemäß Anspruch 10, wobei die zweite transparente Platte (2b) eine segmentierte, optisch schaltbare Platte (40) aufweist und wobei eine weitere Schaltschaltung an dem undurchsichtigen Bereich der zweiten transparenten Platte angeordnet ist.

12. Fahrzeug mit der Fahrzeug-Dachbaugruppe gemäß Anspruch 1.

## Revendications

1. Ensemble de toit transparent pour un toit de véhicule (1), l'ensemble de toit transparent comprenant un panneau segmenté optiquement commutable (40), une circuiterie de tension d'entraînement (20) et une circuiterie de commutation (30),
le panneau segmenté optiquement commutable (40) comprenant au moins deux segments (41-44) commutables indépendamment, chaque segment (41-44) comprenant un premier état optique et un second état optique différent du premier état optique, la circuiterie de tension d'entraînement (20) comprenant une borne d'entrée de circuit de tension (T1) pour recevoir une tension d'entrée et une borne de sortie de circuit de tension (T4) pour délivrer une tension d'entraînement pour commuter entre le premier état optique et le second état optique,
la circuiterie de commutation (30) comprenant une borne d'entrée de circuit de commutation (T8), une borne d'entrée d'instruction (T10) pour recevoir un signal d'instruction représentant une instruction utilisateur indiquant un état optique souhaité de chacun des segments commutables et au moins deux bornes de sortie de circuit de commutation (T12-T15) pour faire fonctionner sélectivement les segments commutables (41-44) correspondant au signal d'instruction, dans lequel le panneau segmenté optiquement commutable (40) comprend une zone transparente (201) et une zone opaque (202), et
dans lequel la circuiterie de commutation (30) est agencée sur la zone opaque (202) du panneau segmenté optiquement commutable (40), **caractérisé en ce que** le panneau segmenté optiquement commutable (40) comprend un élément de circuit imprimé (38), l'élément de circuit imprimé étant configuré pour coupler un segment commutable à une borne de sortie de circuit de commutation respective de la circuiterie de commutation.

2. Ensemble de toit transparent selon la revendication 1, dans lequel la circuiterie de commutation (30) est agencée dans une couche (412) constituée d'un matériau polymère d'une manière étanche aux liquides.

3. Ensemble de toit transparent selon la revendication 2, dans lequel la circuiterie de commutation (30) est agencée dans un boîtier, le boîtier étant agencé dans le matériau polymère (412).

4. Ensemble de toit transparent selon la revendication 1, dans lequel la circuiterie de commutation (30) est agencée sur l'élément de circuit imprimé (38).

5. Ensemble de toit transparent selon la revendication 4, dans lequel la circuiterie de commutation (30) est incorporée dans un élément de circuit intégré (301), l'élément de circuit intégré (301) étant agencé sur l'élément de circuit imprimé (38).

6. Ensemble de toit transparent selon la revendication 4, dans lequel la circuiterie de tension d'entraînement (20) est agencée sur l'élément de circuit imprimé (38).

7. Ensemble de toit transparent selon la revendication 1, dans lequel le panneau segmenté optiquement commutable (40) comprend une couche de matériau commutable (407) agencée entre une première couche d'électrode (405) et une seconde couche d'électrode (406), dans lequel la première couche d'électrode (405) est connectée à la borne de sortie de circuit de tension (T4) et dans lequel la seconde couche d'électrode (406) est segmentée en segments d'électrode, au moins deux segments d'électrode étant connectés à au moins deux bornes de sortie de circuit de commutation (T12-15) respectives.

8. Ensemble de toit transparent selon la revendication 1, dans lequel une tension est délivrée au panneau segmenté optiquement commutable (40) par l'intermédiaire d'un câblage (341, 342), le câblage comprenant un connecteur étanche aux liquides.

9. Ensemble de toit transparent selon la revendication 8, l'ensemble de toit transparent comprenant un premier élément fonctionnel et un second élément fonctionnel, le premier élément fonctionnel comprenant le panneau optiquement commutable (40), et l'ensemble de toit transparent comprenant en outre une unité de commande configurée pour commander le fonctionnement du second élément fonctionnel,
dans lequel la circuiterie de tension d'entraînement est agencée dans l'unité de commande.

10. Ensemble de toit transparent selon la revendication 1, dans lequel l'ensemble de toit transparent comprend un cadre (5), un premier panneau transparent (2a) et un second panneau transparent (2b), le premier panneau transparent (2a) comprenant un panneau segmenté optiquement commutable (40) et le second panneau transparent (2b) comprenant un panneau optiquement commutable,
dans lequel la circuiterie de tension d'entraînement (20) est agencée sur le cadre (5), et
dans lequel la circuiterie de commutation (30) est agencée sur la zone opaque (202) du premier panneau transparent (2a).

11. Ensemble de toit transparent selon la revendication 10, dans lequel le second panneau transparent (2b) comprend un panneau segmenté optiquement commutable (40) et dans lequel une autre circuiterie de commutation est agencée sur la zone opaque du second panneau transparent.

12. Véhicule comprenant l'ensemble de toit de véhicule selon la revendication 1.
